# EUROPEAN PATENT APPLICATION

(11) **EP 2 364 871 A1**
(43) Date of publication of application: **14.09.2011**
(21) Application number: 09823487.5
(22) Date of filing: 19.10.2009
(51) Int. Cl.: B60K 35/00, B60K 37/02

(54) **DISPLAY DEVICE FOR VEHICLE**

(30) Priority: 30.10.2008 JP 2008280174; 17.12.2008 JP 2008320469; 26.08.2009 JP 2009195068
(71) Applicant: Honda Motor Co., Ltd., Minato-ku Tokyo 107-8556 (JP)
(72) Inventor: SATO Masayuki, Wako-shi Saitama 351-0193 (JP); MATSUMOTO Yoshiyuki, Wako-shi Saitama 351-0193 (JP)
(74) Representative: Feller, Frank
(86) International application number: PCT/JP2009/068000
(87) International publication number: WO 2010/050375

(57) **Abstract**

A display device for a vehicle is provided in which when a first image and a second image are projected from a single projection means (18) disposed in the interior of an instrument panel (13) toward the rear of the vehicle, the first image is shown on a transmission type first screen (16) provided on the instrument panel (13) so as to be visible from the vehicle compartment side, and the second image shown on a reflection type second screen (17) integrally provided beneath the first screen (16) is reflected by a reflection means (19) and projected on a front windshield (14) as a virtual image that is visible from the vehicle compartment side. Therefore, it is possible to display the first image and the second image on the instrument panel (13) and the front windshield (14), respectively, while using the single projection means (18), and not only can the weight, number of components, installation space and cost be reduced, but also it becomes easy for the first and second images to work in cooperation.

## Description

### TECHNICAL FIELD

The present invention relates to a display device for a vehicle that displays as an image, on both an instrument panel and an image display part, information that is to be given to a driver.

### BACKGROUND ART

An arrangement in which a first display 21 and a second display 22 are disposed in the interior of an instrument panel, a display image from the first display 21 is transmitted through a translucent first reflector 31, then reflected by a second reflector 41, which is formed from a concave mirror, and by the first reflector 31, and made visible to a driver via an opening of the instrument panel, and a display image from the second display 22 is reflected by a third reflector 61, a fourth reflector 71, and an inner face of a front window and made visible to a driver is known from Patent Document 1 below.
Patent Document 1: Japanese Utility Model Registration Application Laid-open No. 5-72553 3

### DISCLOSURE OF INVENTION

### PROBLEMS TO BE SOLVED BY THE INVENTION

Since in the conventional arrangement the first display 21 for displaying a display image on the first reflector 31 facing the opening of the instrument panel and the second display 22 for displaying a display image on the front window are separately provided, there is the problem that the weight, number of components, installation space, cost, etc. increase.

The present invention has been accomplished in light of the above-mentioned circumstances, and it is an object thereof to simplify the structure of a display device for a vehicle for displaying different images on an instrument panel and an image display part.

### MEANS FOR SOLVING THE PROBLEMS

In order to attain the above object, according to a first aspect of the present invention, there is provided a display device for a vehicle, comprising single image formation means that is disposed in the interior of an instrument panel and is capable of forming a first image and a second image, the first image being visible from the vehicle compartment side through an opening of the instrument panel, and the second image being displayed on an image display part disposed forward of an occupant and being visible from the vehicle compartment side as a virtual image.

Further, according to a second aspect of the present invention, in addition to the first aspect, the image formation means comprises single projection means that projects the first image and the second image toward the rear of the vehicle body, the display device comprising a transmission type first screen that is provided on the instrument panel and shows the first image so as to be visible from the vehicle compartment side, a reflection type second screen that is provided beneath the first screen and shows the second image, and reflection means that reflects an image shown on the second screen and projects the image on the image display part as a virtual image visible from the vehicle compartment side.

Furthermore, according to a third aspect of the present invention, in addition to the first aspect, the image formation means comprises single projection means that projects the first image and the second image toward the front of the vehicle body, the display device comprising a reflection type first screen that is provided on the instrument panel and shows the first image so as to be visible from the vehicle compartment side, a transmission type second screen that is provided beneath the first screen and shows the second image, and reflection means that reflects an image shown on the second screen and projects the image on the image display part as a virtual image.

Moreover, according to a fourth aspect of the present invention, in addition to the first aspect, the image formation means comprises single projection means that projects the first image and the second image toward the front of the vehicle body, the display device comprising a reflection type first screen that is provided on the instrument panel and shows the first image so as to be visible from the vehicle compartment side, and a reflection type second screen that is provided on the image display part and shows the second image.

Further, according to a fifth aspect of the present invention, in addition to the first aspect, the image formation means comprises a single display that shows the first image so as to be visible from the vehicle compartment side and shows the second image so as not to be visible from the vehicle compartment side, the display device comprising reflection means that reflects the second image shown on the display and projects the image on the image display part as a virtual image visible from the vehicle compartment side.

Furthermore, according to a sixth aspect of the present invention, in addition to the first aspect, the image formation means comprises single projection means that projects the first image and the second image toward the rear of the vehicle body, the display device comprising a reflection type first screen that is provided on the instrument panel and shows the first image, reflection means that reflects the first image shown on the first screen so as to be visible from the vehicle compartment side, a reflection type second screen that is provided above the first screen and shows the second image, and the image display part, which reflects the second image shown on the second screen and displays the image as a virtual image visible from the vehicle compartment side.

Moreover, according to a seventh aspect of the present invention, in addition to the first aspect, the image formation means comprises single projection means that projects the first image and the second image upward, the display device comprising a transmission type first screen that is provided on the instrument panel and shows the first image, reflection means that reflects the first image shown on the first screen so as to be visible from the vehicle compartment side, a transmission type second screen that is provided forward of the first screen and shows the second image, and the image display part, which reflects the second image shown on the second screen and displays the image as a virtual image visible from the vehicle compartment side.

Further, according to an eighth aspect of the present invention, in addition to the first aspect, the image formation means comprises a single laser projector that projects the first image and the second image toward the rear, the display device comprising a reflection type first screen that is provided on the instrument panel and shows the first image, reflection means that reflects the first image shown on the first screen so as to be visible from the vehicle compartment side, a reflection type second screen that is provided on the instrument panel and shows the second image, and reflection means that reflects an image shown on the second screen and projects the image on the image display part as a virtual image, the distance from the laser projector to the first screen being different from the distance from the laser projector to the second screen.

Furthermore, according to a ninth aspect of the present invention, in addition to the first aspect, the image formation means comprises single projection means that projects a third image in addition to the first image and the second image, the display device comprising a transmission type first screen that is provided on the instrument panel and shows the first image so as to be visible to an occupant, a reflection type second screen that is provided beneath the first screen and shows the second image, the image display part, which reflects the second image shown on the second screen and displays the image as a virtual image visible from the vehicle compartment side, and a third screen that is provided on the vehicle compartment roof and shows the third image so as to be visible.

Here, a front windshield 14 and a visor 54 of embodiments correspond to the image display part of the present invention, a projection means 18 of the embodiments corresponds to the image formation means of the present invention, concave mirrors 19, 42, 43, 53, 63, 83 and 84 of the embodiments correspond to the reflection means of the present invention, and a liquid crystal display 41 and an electronic paper 44 of the embodiments correspond to the image formation means or the display of the present invention.

### EFFECTS OF THE INVENTION

In accordance with the first aspect of the present invention, when the single image formation means disposed in the interior of the instrument panel forms the first image and the second image, the first image is visible from the vehicle compartment side through the opening of the instrument panel, and the second image is displayed on the image display part and is visible from the vehicle compartment side as a virtual image, and therefore, it is possible to display the first image and the second image on the instrument panel and the image display part, respectively, while using the single image formation means, and not only can the weight, number of components, installation space and cost be reduced, but also it becomes easy for the first and second images to work in cooperation.

In accordance with the second aspect of the present invention, when the first image and the second image are projected toward the rear of the vehicle body from the single projection means disposed within the instrument panel, the first image is shown on the transmission type first screen provided on the instrument panel so as to be visible from the vehicle compartment side, and the second screen shown on the reflection type second screen provided beneath the first screen is reflected by the reflection means and projected on the image display part as a virtual image that is visible from the vehicle compartment side. Therefore, it becomes possible to display the first image and the second image on the instrument panel and the image display part, respectively, while using the single projection means, and not only can the weight, number of components, installation space and cost be reduced, but also it becomes easy for the first and second images to work in cooperation.

In accordance with the third aspect of the present invention, when the first image and the second image are projected toward the front of the vehicle body from the single projection means disposed within the instrument panel, the first image is shown on the reflection type first screen provided on the instrument panel so as to be visible from the vehicle compartment side, and the second image shown on the transmission type second screen provided beneath the first screen is reflected by the reflection means and projected on the image display part as a virtual image that is visible from the vehicle compartment side. Therefore, it becomes possible to display the first image and the second image on the instrument panel and the image display part, respectively, while using the single projection means, and not only can the weight, number of components, installation space and cost be reduced, but also it becomes easy for the first and second images to work in cooperation.

In accordance with the fourth aspect of the present invention, when the first image and the second image are projected toward the front of the vehicle body from the single projection means disposed within the instrument panel, the first image is shown on the reflection type first screen provided on the instrument panel so as to be visible from the vehicle compartment side, and the second image is shown on the reflection type second screen provided on the image display part so as to be visible from the vehicle compartment side. Therefore, it is possible to display the first image and the second image on the instrument panel and the image display part, respectively, while using the single projection means, and not only can the weight, number of components, installation space and cost be reduced, but also it becomes easy for the first and second images to work in cooperation.

In accordance with the fifth aspect of the present invention, the first image is shown on the single display provided on the instrument panel so as to be visible from the vehicle compartment side, and the second image is shown so as to be invisible from the vehicle compartment side, the second image being reflected by the reflection means and projected on the image display part as a virtual image that is visible from the vehicle compartment side. Therefore, it is possible to display the first image and the second image on the instrument panel and the image display part, respectively, while using the single display, and not only can the weight, number of components, installation space and cost be reduced, but also it becomes easy for the first and second images to work in cooperation.

In accordance with the sixth aspect of the present invention, when the first image and the second image are projected toward the rear of the vehicle body from the single projection means provided on the instrument panel, the first image shown on the reflection type first screen provided on the instrument panel is reflected by the reflection means and shown so as to be visible from the vehicle compartment side, and the second image shown on the reflection type second screen provided above the first screen is reflected by the image display part and displayed as a virtual image that is visible from the vehicle compartment side. Therefore, it is possible to display the first image and the second image on the instrument panel and the image display part, respectively, while using the single projection means, and not only can the weight, number of components, installation space and cost be reduced, but also it becomes easy for the first and second images to work in cooperation.

In accordance with the seventh aspect of the present invention, when the first image and the second image are projected upwards from the single projection means provided on the instrument panel, the first image shown on the transmission type first screen provided on the instrument panel is reflected by the reflection means and shown so as to be visible from the vehicle compartment side, and the second image shown on the transmission type second screen provided forward of the first screen is reflected by the image display part and displayed as a virtual image that is visible from the vehicle compartment side. Therefore, it is possible to display the first image and the second image on the instrument panel and the image display part, respectively, while using the single projection means, and not only can the weight, number of components, installation space and cost be reduced, but also it becomes easy for the first and second images to work in cooperation.

In accordance with the eighth aspect of the present invention, when the first image and the second image are projected rearwards from the single laser projector provided on the instrument panel, the first image shown on the reflection type first screen provided on the instrument panel is reflected by the reflection means and shown so as to be visible from the vehicle compartment side, and the second image shown on the reflection type second screen provided on the instrument panel is reflected by the reflection means and projected on the image display part as a virtual image that is visible from the vehicle compartment side. Therefore, it is possible to display the first image and the second image on the instrument panel and the image display part, respectively, while using the single projection means, and not only can the weight, number of components, installation space and cost be reduced, but also it becomes easy for the first and second images to work in cooperation. Moreover, the first and second screens can be disposed apart from each other by using a laser projector, thereby enhancing the degree of freedom of the optical system layout within the instrument panel.

In accordance with the ninth aspect of the present invention, the third image is projected from the single projection means provided on the instrument panel in addition to the first image and the second image, the first image is shown on the transmission type first screen provided on the instrument panel so as to be visible for the passenger, the second image shown on the reflection type second screen provided beneath the first screen is reflected by the reflection means and displayed on the image display part as a virtual image that is visible from the vehicle compartment side, and the third image is shown as visible on the third screen provided on the vehicle compartment root. Therefore, it is possible to display the first image and the second image on the instrument panel and the image display part, respectively, and to display the third image on the third screen of the roof of the vehicle compartment while using the single projection means, and not only can the weight, number of components, installation space and cost be reduced, but also it becomes easy for the first and second images to work in cooperation.

### BRIEF DESCRIPTION OF DRAWINGS

[FIG. 1] FIG. 1 is a side view of a front portion of an automobile. (first embodiment)
[FIG. 2] FIG. 2 is a view from arrow 2 in FIG. 1. (first embodiment)
[FIG. 3] FIG. 3 is an enlarged sectional view along line 3-3 in FIG. 2. (first embodiment)
[FIG. 4] FIG. 4 is a view corresponding to FIG. 3 described above. (second embodiment)
[FIG. 5] FIG. 5 is a view corresponding to FIG. 3 described above. (third embodiment)
[FIG. 6] FIG. 6 is a view corresponding to FIG. 3 described above. (fourth embodiment)
[FIG. 7] FIG. 7 is a view corresponding to FIG. 3 described above. (fifth embodiment)
[FIG. 8] FIG. 8 is a view corresponding to FIG. 3 described above. (sixth embodiment)
[FIG. 9] FIG. 9 is a view corresponding to FIG. 3 described above. (seventh embodiment)
[FIG. 10] FIG. 10 is a view corresponding to FIG. 3 described above. (eighth embodiment)
[FIG. 11] FIG. 11 is a view corresponding to FIG. 3 described above. (ninth embodiment)
[FIG. 12] FIG. 12 is a view corresponding to FIG. 3 described above. (tenth embodiment)
[FIG. 13] FIG. 13 is a view from arrow 13 in FIG. 12. (tenth embodiment)

### EXPLANATION OF REFERENCE NUMERALS AND CHARACTERS

- 13: instrument panel
- 13a: opening
- 14: front windshield (image display part)
- 16: first screen
- 17: second screen
- 18: projection means (image formation means, laser projector)
- 19: concave mirror (reflection means)
- 21: first screen
- 22: second screen
- 31: first screen
- 32: second screen
- 41: liquid crystal display (image formation means, display)
- 42: first concave mirror (reflection means)
- 43: second concave mirror (reflection means)
- 44: electronic paper (image formation means, display)
- 51: first screen
- 52: second screen
- 53: concave mirror (reflection means)
- 54: visor (image display part)
- 61: first screen
- 62: second screen
- 63: concave mirror (reflection means)
- 81: first screen
- 82: second screen
- 83: first concave mirror (reflection means)
- 84: second concave mirror (reflection means)
- 91: first screen
- 92: second screen
- 96: third screen

### BEST MODE FOR CARRYING OUT THE INVENTION

Modes for carrying out the present invention are explained below by reference to the attached drawings.

### Embodiment 1

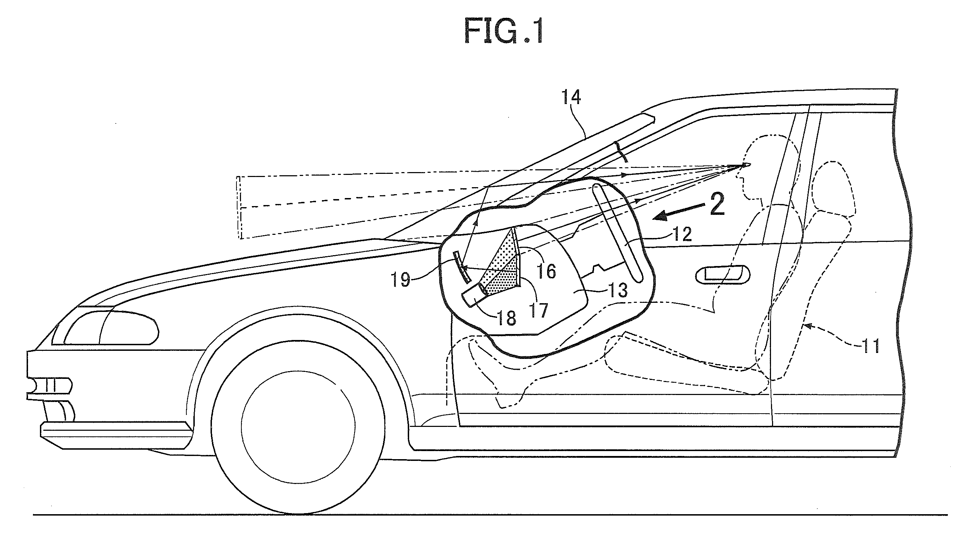

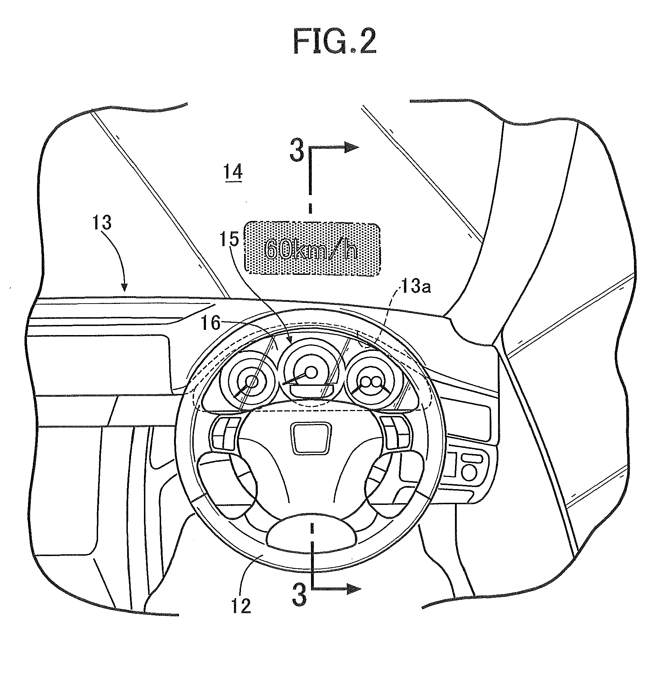

As shown in FIG. 1 and FIG. 2, an instrument panel 13 is disposed forward of a steering wheel 12 operated by an occupant seated on a driver's seat 11 of an automobile, and a front windshield 14 is disposed forward of the instrument panel 13. An opening 13a is formed in the instrument panel 13 forward of the steering wheel 12, and a meter panel 15 on which various types of meters are displayed is provided in an inner part of the opening 13a.

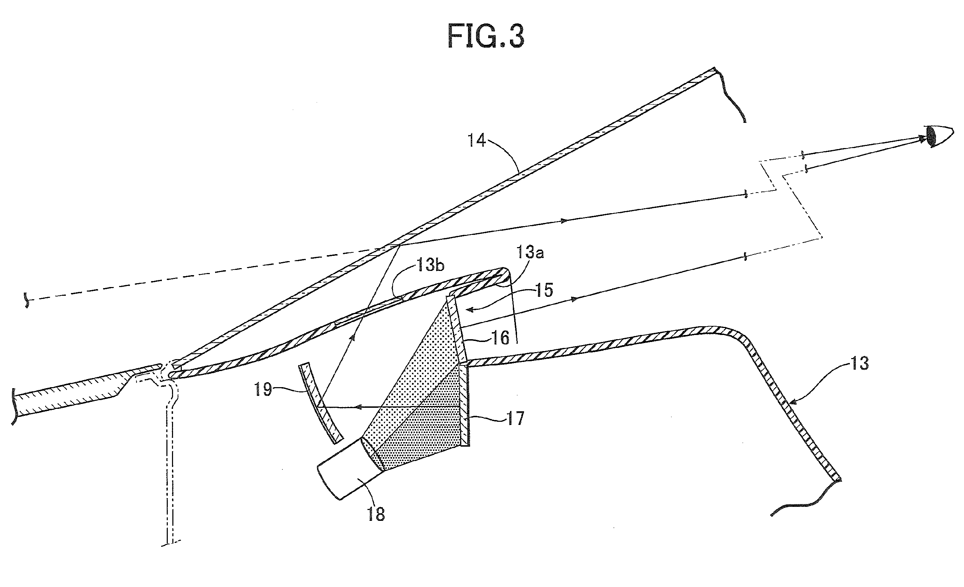

As shown in FIG. 3, the meter panel 15, which is provided in the inner part of the opening 13a in the instrument panel 13 so that it is visible to a driver, is formed from a transmission type first screen 16, and a reflection type second screen 17 is provided integrally with a lower part of the first screen 16. The second screen 17 is positioned beneath the opening 13a of the instrument panel 13 and is housed in the interior of the instrument panel 13 so that it is not visible to the driver.

Single projection means 18, which is a projector, is disposed in the interior of the instrument panel 13 so as to face toward the rear of the vehicle body. The projection means 18 projects a first image and a second image, which are different from each other, on the first and second screens 16 and 17 positioned therebehind, and the image projected on the first screen 16 is an image of the meter panel 15 such as a speedometer or a tachometer (see FIG. 2). Since the first screen 16 is of a transmission type, the first image projected on the back (forward face) is transmitted to the front (rear face) side and becomes visible to the driver.

On the other hand, since the second screen 17 is a high brightness reflection type, the second image projected on the back (forward face) thereof is reflected forward, then reflected by a concave mirror 19 disposed in the interior of the instrument panel 13, further passes through an opening 13b in an upper face of the instrument panel 13, and is reflected by an inner face of the front windshield 14, and the driver can therefore view the second image as a virtual image that is present forward of the front windshield 14. The second image provides information that the driver has to recognize with certainty, such as for example vehicle speed or various types of alarms (see FIG. 2).

As hereinbefore described, in accordance with the present embodiment, since the single projection means 18 displays the first image, which is projected from its upper half, directly on the first screen 16, and displays the second image, which is projected from its lower half, on the front windshield 14 via the second screen 17 and the concave mirror 19, compared with a case in which the first and second images are projected by two corresponding projection means, it is possible to reduce the weight, number of components, installation space, and cost. Moreover, since it is easy for the first and second images to work in cooperation, when the display of a speedometer of the first image exceeds a predetermined value or when the display of a tachometer of the first image exceeds a predetermined value, an alarm can be given by the second image.

### Embodiment 2

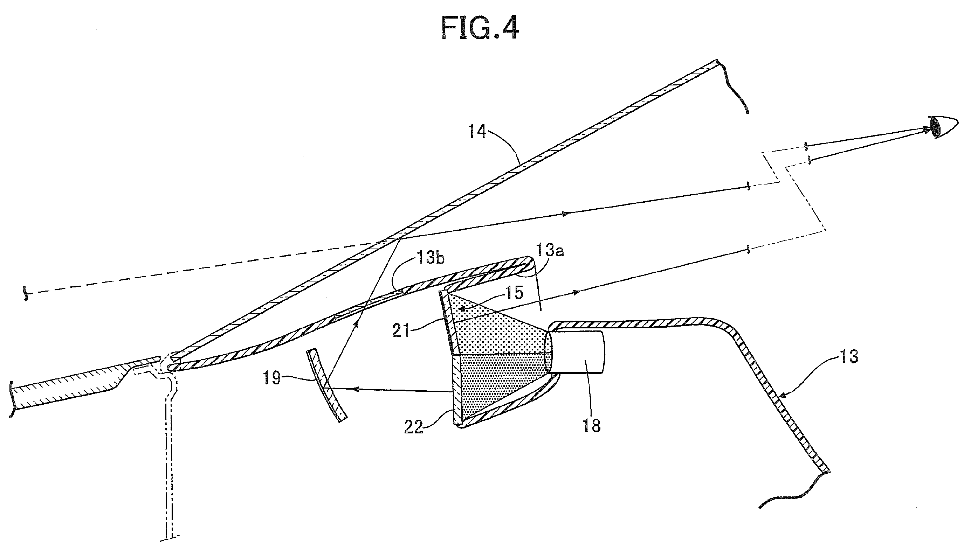

A second embodiment of the present invention, which corresponds to the invention according to Claim 3, is now explained by reference to FIG. 4.

In the first embodiment, the projection means 18 is disposed so as to face toward the rear of the vehicle body, whereas in the second embodiment projection means 18 is disposed so as to face toward the front of the vehicle body, and a first screen 21 on the upper side and a second screen 22 on the lower side, which are formed integrally, are disposed forward of the projection means 18. The first screen 21 is of a high brightness reflection type and is disposed at a position where it is visible through an opening 13a of an instrument panel 13, and a first image projected on the front (rear face) of the first screen 21 becomes directly visible to a driver.

On the other hand, the second screen 21 is disposed at a position where it is hidden beneath the opening 13a of the instrument panel 13 and is not visible to the driver. The second screen 21 is of a transmission type, and a second image projected on the back (rear face) thereof from the projection means 18 is transmitted to the front (forward face) side. Since an image on the front (forward face) of the second screen 21 is reflected by a concave mirror 19 disposed in the interior of the instrument panel 13, further passes through an opening 13b in an upper face of the instrument panel 13, and is reflected by an inner face of a front windshield 14, the second image can be viewed by a driver as a virtual image present forward of the front windshield 14.

In accordance with the second embodiment also, the same operational effects as those of the first embodiment can be achieved by projecting the first image and the second image by the single projection means 18.

### Embodiment 3

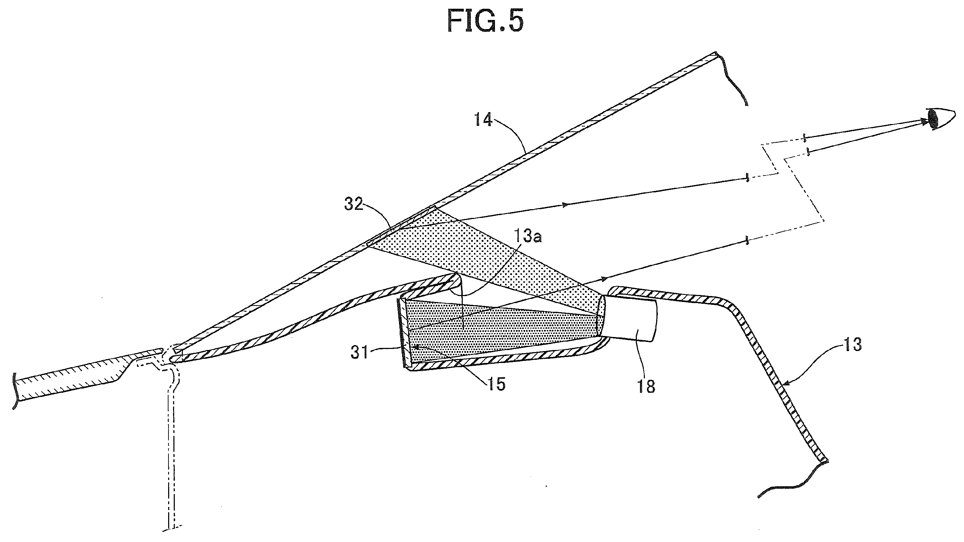

A third embodiment of the present invention, which corresponds to the invention according to Claim 4, is now explained by reference to FIG. 5.

In the third embodiment also, in the same manner as in the second embodiment, projection means 18 is disposed so as to face toward the front of the vehicle body, and only a first screen 31 is disposed in the interior of an instrument panel 13. The first screen 31 is of a high brightness reflection type and is disposed at a position where it is visible through an opening 13a of the instrument panel 13, and a first image projected on the front (rear face) thereof becomes directly visible to a driver.

On the other hand, a second screen 32 is formed from a polarized light scattering sheet embedded in part of a front windshield 14, and a second image projected from the projection means 18 is displayed as a real image directly on the second screen 32 of the front windshield 14 though the opening 13a of the instrument panel 13 and is viewed by the driver.

In accordance with the third embodiment also, the same operational effects as those of the first embodiment can be achieved by projecting the first image and the second image by the single projection means 18.

### Embodiment 4

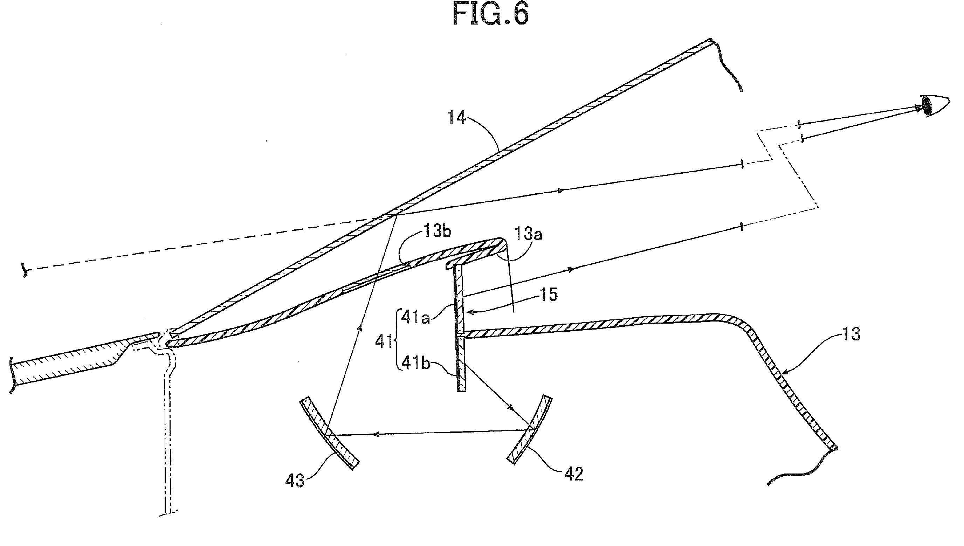

A fourth embodiment of the present invention, which corresponds to the invention according to Claim 5, is now explained by reference to FIG. 6.

The fourth embodiment includes a single liquid crystal display 41 in the interior of an instrument panel 13 instead of the projection means 18 of the first to third embodiments. The liquid crystal display 41, which is disposed so that an image display face is directed rearward, integrally includes a first image display portion 41a on the upper side and a second image display portion 41b on the lower side, and the first image display portion 41a is directly visible to a driver through an opening 13a of the instrument panel 13.

Furthermore, first and second concave mirrors 42 and 43 are disposed rearward and forward respectively of the second image display portion 41b, which is not visible to the driver; a second image displayed on the second image display portion 41b is reflected by the first concave mirror 42 and the second concave mirror 43, further passes through an opening 13b in an upper face of the instrument panel 13, and is reflected by an inner face of a front windshield 14, and the driver can therefore view the second image as a virtual image present forward of the front windshield 14.

In accordance with the fourth embodiment also, a first image is displayed in the interior of the instrument panel 13 and the second image is displayed on the front windshield 14 by means of the single liquid crystal display 41, and the same operational effects as those of the first embodiment can thus be achieved.

### Embodiment 5

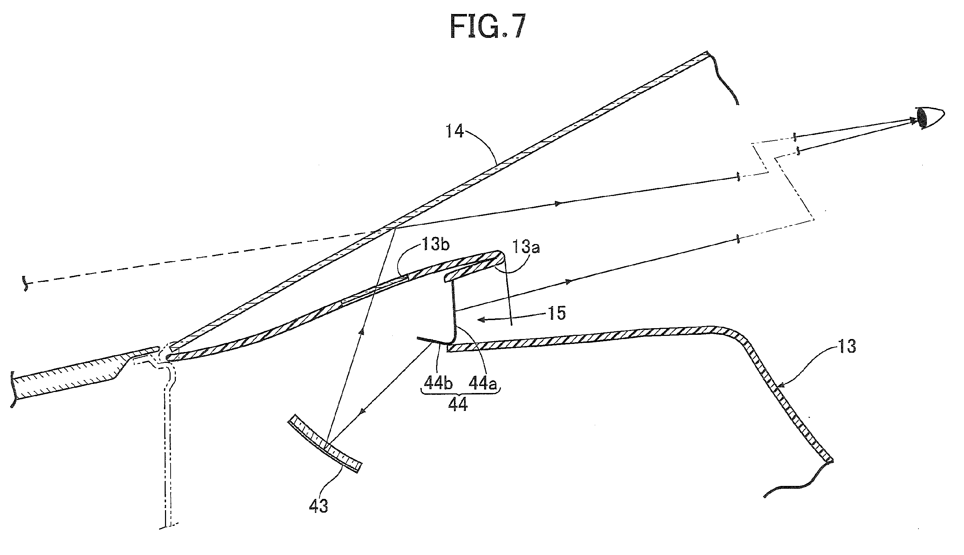

A fifth embodiment of the present invention, which corresponds to the invention according to Claim 5, is now explained by reference to FIG. 7.

The fifth embodiment is a modification of the fourth embodiment and employs an electronic paper 44 instead of the liquid crystal display 41 of the fourth embodiment. The electronic paper 44 referred to here is formed by including a large number of microcapsules containing charged white particles and microcapsules containing charged black particles in a flexible thin paper-like material; by applying a voltage so as to move the white capsules and the black capsules an image is displayed.

In the present embodiment, one sheet of the electronic paper 44 is curved in a J-shape; one of the ends sandwiching the curved part is a first image display portion 44a that is directly visible to a driver, and the other of the ends sandwiching the curved part is a second image display portion 44b facing a concave mirror 43. Compared with the liquid crystal display 41, the electronic paper 44, which has flexibility, has a high degree of freedom in terms of shape; the fourth embodiment requires two concave mirrors 42 and 43, but the fifth embodiment requires only one concave face 43, and the number of components and the cost can be reduced.

### Embodiment 6

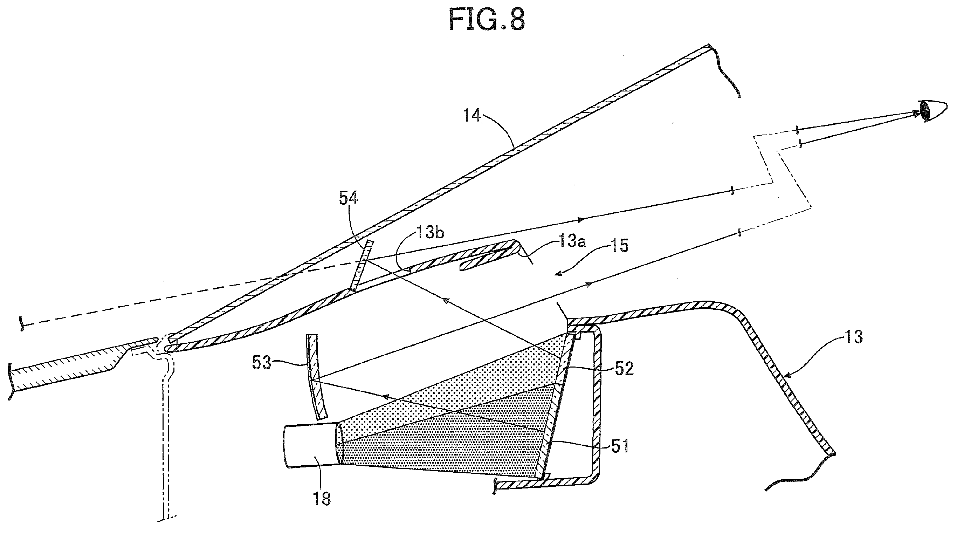

A sixth embodiment of the present invention, which corresponds to the invention according to Claim 6, is now explained by reference to FIG. 8.

The sixth embodiment is a modification of the first embodiment; in the first embodiment the first screen 16 is of a transmission type and the second screen 17 is of a reflection type, whereas in the sixth embodiment a first screen 51 and a second screen 52 are both of a high brightness reflection type, and the first and second screens 51 and 52 change places with each other in their vertical positional relationship compared with the first embodiment.

Furthermore, in the first embodiment the first image of the transmission type first screen 16 is directly viewed by a driver, whereas in the sixth embodiment a first image of the reflection type first screen 51 is reflected by a concave mirror 53 and viewed by a driver. Moreover, in the first embodiment the second image of the reflection type second screen 17 is reflected by the concave mirror 19 and projected on the front windshield 14, whereas in the sixth embodiment a second image of the reflection type second screen 52 is reflected by a visor (translucent plate) 54 and is made visible as a virtual image present forward of the visor 54. The visor 54 is formed from a hologram or a half mirror, and forms an image display part of the present invention instead of the front windshield 14 of the first embodiment.

In this way, in accordance with the present embodiment, since the visor 54 is used as an image display part instead of the front windshield 14, not only can this be dealt with merely by adding the visor 54 without changing the existing front windshield 14, but also since the second image is displayed as a virtual image present forward of the visor 54, the burden on focal accommodation while driving can be lessened. Furthermore, since the first image of the reflection type first screen 51 is also displayed as a virtual image present forward of the concave mirror 53, the burden on focal accommodation while driving can be lessened.

### Embodiment 7

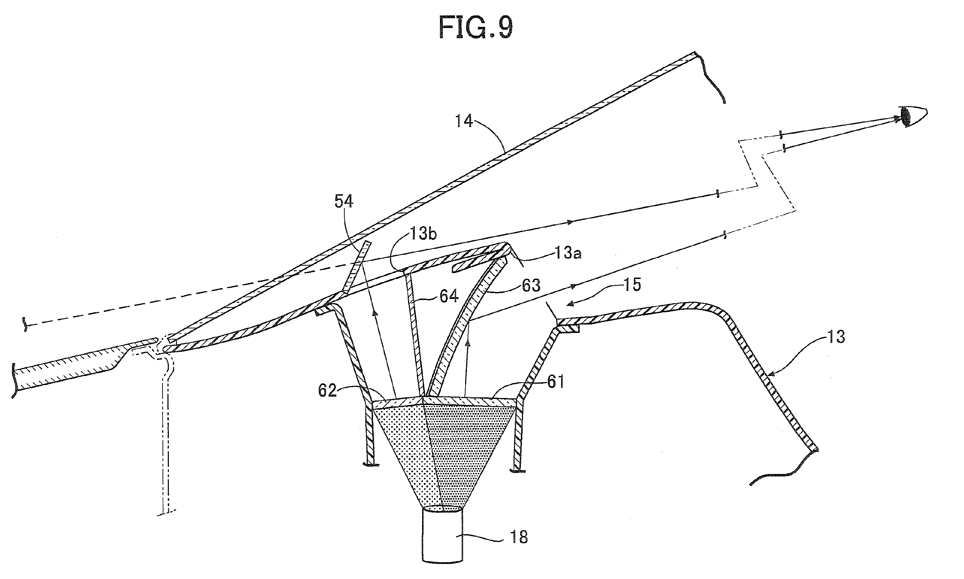

A seventh embodiment of the present invention, which corresponds to the invention according to Claim 7, is now explained by reference to FIG. 9.

The seventh embodiment is a modification of the sixth embodiment; in the sixth embodiment the projection means 18 projects an image rearward, whereas in the seventh embodiment projection means 18 projects an image upward. Furthermore, in the sixth embodiment the first and second screens 51 and 52 are both of a reflection type, whereas in the seventh embodiment first and second screens 61 and 62 are both of a transmission type, and the position of a concave mirror 63 changes accordingly. A light-shielding plate 64 is provided so that light transmitted through the first screen 61 will not hit a visor 54. The arrangement of the seventh embodiment is otherwise the same as that of the sixth embodiment, and the same operational effects as those of the sixth embodiment can be exhibited.

### Embodiment 8

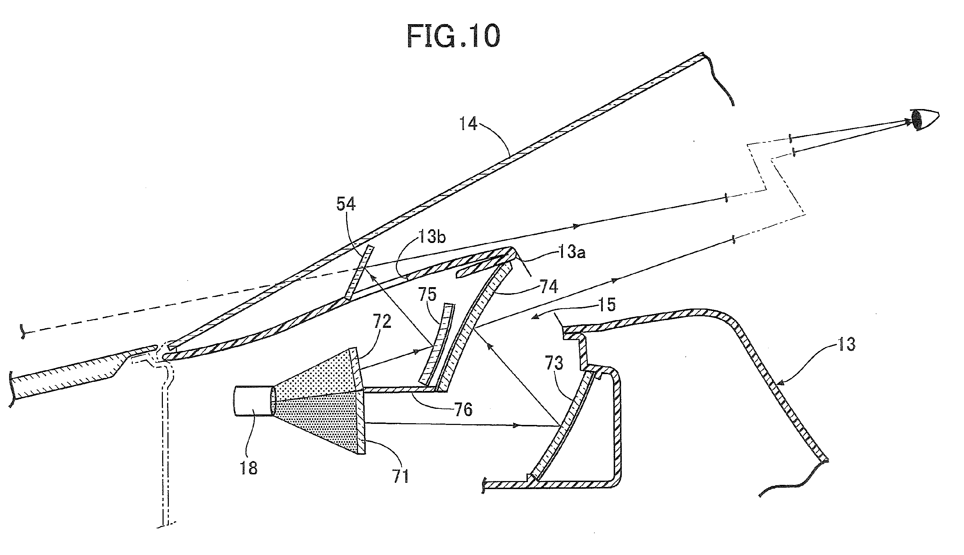

An eighth embodiment of the present invention is now explained by reference to FIG. 10.

The eighth embodiment is a modification of the seventh embodiment; in the seventh embodiment the projection means 18 projects an image upward, whereas in the seventh embodiment projection means 18 projects an image rearward. In the seventh embodiment a first image transmitted through the first screen 61 is reflected by one concave mirror 63 and made visible to a driver, whereas in the eighth embodiment a first image transmitted through a first screen 71 is reflected by two, that is, first and second, concave mirrors 73 and 74 and made visible to a driver. Furthermore, in the seventh embodiment a second image transmitted through the second screen 62 is reflected by the visor 54, whereas in the eighth embodiment a second image transmitted through a second screen 72 is reflected by a concave mirror 75 and then reflected by a visor 54. A light-shielding plate 76 is provided between the first and second screens 71 and 72 so that light of the first image transmitted through the first screen 71 will not hit the visor 54.

The arrangement of the eighth embodiment is otherwise the same as that of the seventh embodiment, and the same operational effects as those of the seventh embodiment can be exhibited.

### Embodiment 9

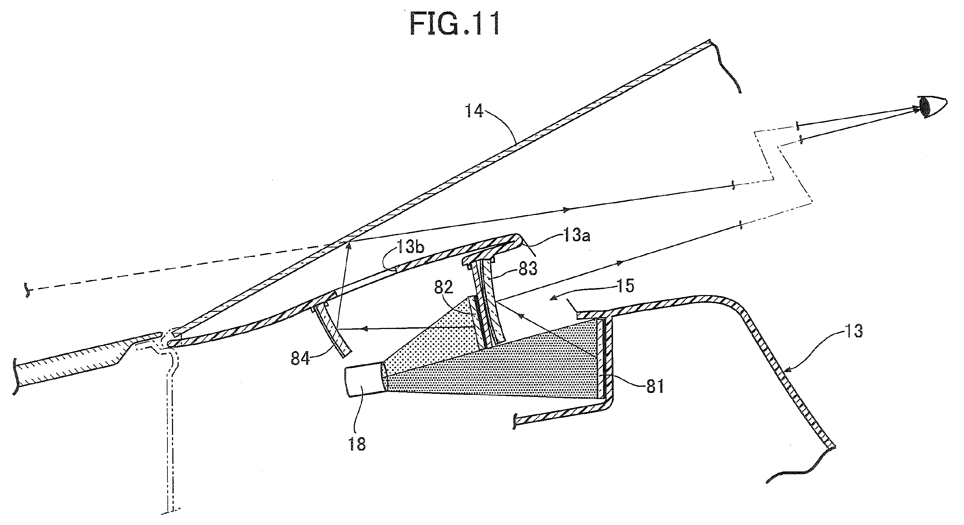

A ninth embodiment of the present invention, which corresponds to the invention according to Claim 8, is now explained by reference to FIG. 11.

The ninth embodiment is a modification of the sixth embodiment; in the sixth embodiment the reflection type first and second screens 51 and 52 are disposed on the same plane, whereas in the ninth embodiment a reflection type first screen 81 is disposed at a position distant from projection means 18 and a reflection type second screen 82 is disposed at a position close to the projection means 18. In this case, in accordance with use of a laser projector as the projection means 18, images can be formed by focusing images on both the first and second screens 81 and 82. A first image reflected by the first screen 81 is reflected by a concave mirror 83 and viewed by a driver, and a second image reflected by the second screen 82 is reflected by a concave mirror 84 and illuminates a front windshield 14.

In accordance with the present embodiment, since the first and second screens 81 and 82 can be disposed apart from each other, the degree of freedom in layout of the optical system in the interior of the instrument panel 13 improves.

### Embodiment 10

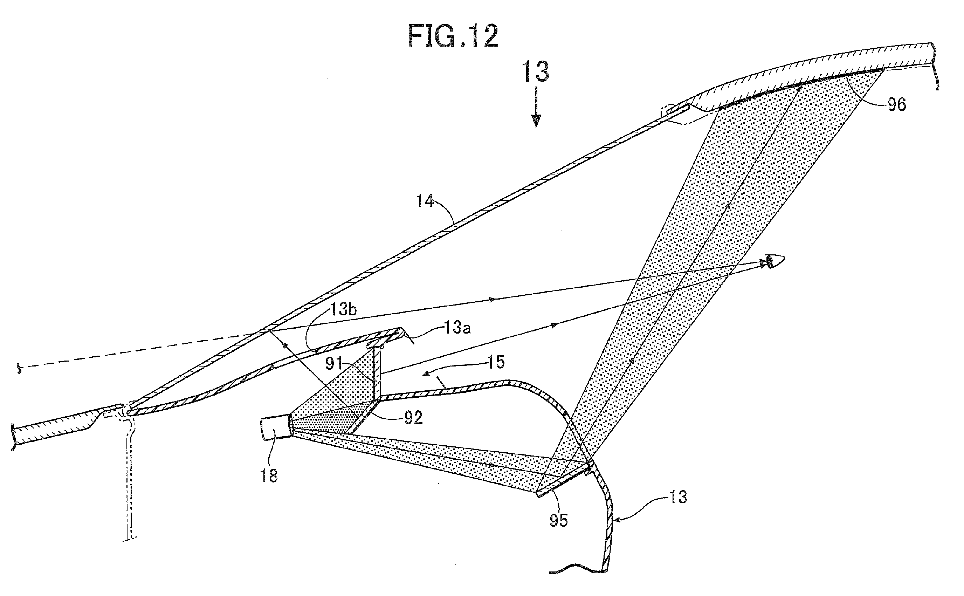

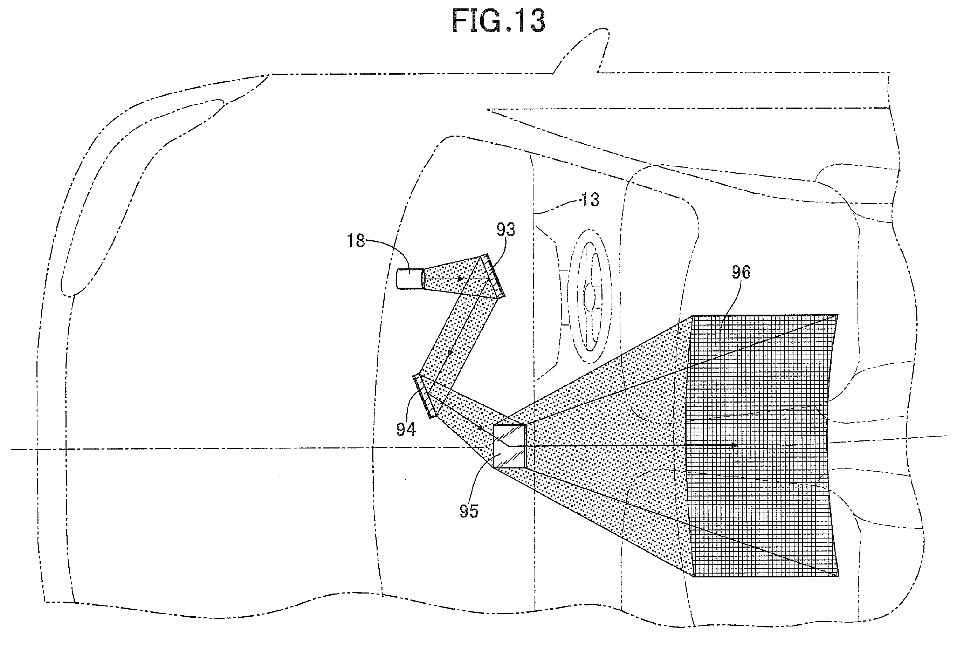

A tenth embodiment of the present invention, which corresponds to the invention according to Claim 9, is now explained by reference to FIG. 12 and FIG. 13.

The tenth embodiment is a modification of the first embodiment; in the first embodiment the image reflected by the reflection type second screen 17 is reflected by the concave mirror 19 and projected on the front windshield 14, whereas in the ninth embodiment an image reflected by a reflection type second screen 91 is projected directly on a front windshield 14. Projection means 18 proj ects, in addition to first and second images projected on the first and second screens 91 and 92, a third image; the third image is reflected by three mirrors 93, 94, and 95 and projected on a third screen 96 provided on a vehicle compartment roof, and the image is made visible to an occupant on a rear seat. When the interior material of the roof is close to white, the interior material may be used as the third screen 96, but when it has a dark color, it is necessary to provide the third screen 96 for exclusive use.

In accordance with the present embodiment, it becomes possible to provide information both to the driver and an occupant on a rear seat by use of the common projection means 18.

As described above, embodiments of the present invention are explained in detail, but the present invention may be modified in a variety of ways as long as the modifications do not depart from the spirit and scope thereof.

For example, in the embodiments, the image is shown to the driver who is an occupant on the driver's seat, but an image may be shown to an occupant on a seat, other than the driver's seat, such as an assistant driver's seat.

Further, the reflection means of the present invention is not limited to the concave minors 19, 42, 43, 53, 63, 83 and 84 of the embodiments, and it may be a plane mirror or a free-form surface mirror and may be a combination of a plurality of mirrors or lenses.

Furthermore, a display using LED and the like may be employed instead of the liquid crystal display 41 and the electronic paper 44 of the embodiments.

## Claims

1. A display device for a vehicle, comprising single image formation means (18, 41, 44) that is disposed in the interior of an instrument panel (13) and is capable of forming a first image and a second image, the first image being visible from the vehicle compartment side through an opening (13a) of the instrument panel (13), and the second image being displayed on an image display part (14, 54) disposed forward of an occupant and being visible from the vehicle compartment side as a virtual image.

2. The display device for a vehicle according to Claim 1, wherein the image formation means comprises single projection means (18) that projects the first image and the second image toward the rear of the vehicle body, the display device comprising
a transmission type first screen (16) that is provided on the instrument panel (13) and shows the first image so as to be visible from the vehicle compartment side,
a reflection type second screen (17) that is provided beneath the first screen (16) and shows the second image, and
reflection means (19) that reflects an image shown on the second screen (17) and projects the image on the image display part (14) as a virtual image visible from the vehicle compartment side.

3. The display device for a vehicle according to Claim 1, wherein the image formation means comprises single projection means (18) that projects the first image and the second image toward the front of the vehicle body, the display device comprising
a reflection type first screen (21) that is provided on the instrument panel (13) and shows the first image so as to be visible from the vehicle compartment side,
a transmission type second screen (22) that is provided beneath the first screen (21) and shows the second image, and
reflection means (19) that reflects an image shown on the second screen (22) and projects the image on the image display part (14) as a virtual image.

4. The display device for a vehicle according to Claim 1, wherein the image formation means comprises single projection means (18) that projects the first image and the second image toward the front of the vehicle body, the display device comprising
a reflection type first screen (31) that is provided on the instrument panel (13) and shows the first image so as to be visible from the vehicle compartment side, and
a reflection type second screen (32) that is provided on the image display part (14) and shows the second image.

5. The display device for a vehicle according to Claim 1, wherein the image formation means comprises a single display (41, 44) that shows the first image so as to be visible from the vehicle compartment side and shows the second image so as not to be visible from the vehicle compartment side, the display device comprising
reflection means (42, 43) that reflects the second image shown on the display (41, 44) and projects the image on the image display part (14) as a virtual image visible from the vehicle compartment side.

6. The display device for a vehicle according to Claim 1, wherein the image formation means comprises single projection means (18) that projects the first image and the second image toward the rear of the vehicle body, the display device comprising
a reflection type first screen (51) that is provided on the instrument panel (13) and shows the first image,
reflection means (53) that reflects the first image shown on the first screen (51) so as to be visible from the vehicle compartment side,
a reflection type second screen (52) that is provided above the first screen (51) and shows the second image, and
the image display part (54), which reflects the second image shown on the second screen (52) and displays the image as a virtual image visible from the vehicle compartment side.

7. The display device for a vehicle according to Claim 1, wherein the image formation means comprises single projection means (18) that projects the first image and the second image upward, the display device comprising
a transmission type first screen (61) that is provided on the instrument panel (13) and shows the first image,
reflection means (63) that reflects the first image shown on the first screen (61) so as to be visible from the vehicle compartment side,
a transmission type second screen (62) that is provided forward of the first screen (61) and shows the second image, and
the image display part (54), which reflects the second image shown on the second screen (62) and displays the image as a virtual image visible from the vehicle compartment side.

8. The display device for a vehicle according to Claim 1, wherein the image formation means comprises a single laser projector (18) that projects the first image and the second image toward the rear, the display device comprising
a reflection type first screen (81) that is provided on the instrument panel (13) and shows the first image,
reflection means (83) that reflects the first image shown on the first screen (81) so as to be visible from the vehicle compartment side,
a reflection type second screen (82) that is provided on the instrument panel (13) and shows the second image, and
reflection means (84) that reflects an image shown on the second screen (82) and projects the image on the image display part (14) as a virtual image,
the distance from the laser projector (18) to the first screen (81) being different from the distance from the laser projector (18) to the second screen (82).

9. The display device for a vehicle according to Claim 1, wherein the image formation means comprises single projection means (18) that projects a third image in addition to the first image and the second image, the display device comprising
a transmission type first screen (91) that is provided on the instrument panel (13) and shows the first image so as to be visible to an occupant,
a reflection type second screen (92) that is provided beneath the first screen (91) and shows the second image,
the image display part (14), which reflects the second image shown on the second screen (92) and displays the image as a virtual image visible from the vehicle compartment side, and
a third screen (96) that is provided on the vehicle compartment roof and shows the third image so as to be visible.
